# EUROPEAN PATENT APPLICATION

(11) **EP 4 290 468 A1**
(43) Date of publication of application: **13.12.2023**
(21) Application number: 22749394.7
(22) Date of filing: 05.01.2022
(51) Int. Cl.: G06T 19/00, G06T 7/00

(54) **INFORMATION PROCESSING DEVICE, INFORMATION PROCESSING METHOD, AND PROGRAM**

(30) Priority: 05.02.2021 JP 2021017389
(71) Applicant: Sony Semiconductor Solutions Corporation, Atsugi-shi, Kanagawa 243-0014 (JP)
(72) Inventor: MATSUMORI Go, Atsugi-shi, Kanagawa 243-0014 (JP); TSUJI Yuki, Atsugi-shi, Kanagawa 243-0014 (JP); WAKABAYASHI Sayuri, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/000077
(87) International publication number: WO 2022/168515

(57) **Abstract**

The present technology relates to an information processing apparatus, an information processing method, and a program by which, in a case where a change occurs in the real world, a corresponding three-dimensional map can be updated according to the change.

The information processing apparatus includes a detection section that detects a change in the real world with use of an image picked up of the real world, and an updating section that updates, in a case where a change in the real world is detected by the detection section, a three-dimensional map generated by image pickup of the real world. The present technology can be applied, for example, to an information processing apparatus that retains a three-dimensional map and updates the retained three-dimensional map.

## Description

### [Technical Field]

The present technology relates to an information processing apparatus, an information processing method, and a program, and particularly relates to an information processing apparatus, an information processing method, and a program by which, for example, a change in the real world is reflected on a 3D map.

### [Background Art]

A technology called augmented reality (AR) is known which presents additional information in an overlapping relation with the real world to a user. In the AR technology, information (AR content) to be presented to a user is also called annotation. The annotation is visualized with a virtual object in various forms such as text, an icon, or an animation.

In PTL 1, it is proposed to control display of a virtual object appropriately in such a manner that a user may not be confused by disturbance of the display of the virtual object.

### [Citation List]

### [Patent Literature]

[PTL 1]
Japanese Patent Laid-Open No. 2012-221250

### [Summary]

### [Technical Problem]

In order to place AR content, a three-dimensional map of the real world is generated. In a case where a change occurs in the real world, if the change is not reflected on the three-dimensional map, the AR content is not displayed at an assumed position, resulting in the possibility that the user may be confused. A mechanism is demanded which can reflect, in a case where a change occurs in the real world, the change easily and simply on a three-dimensional map.

The present technology has been made in view of such a situation as just described and makes it possible to perform, in a case where a change occurs in the real world, updating of a three-dimensional map according to the change.

### [Solution to Problem]

A first information processing apparatus of one aspect of the present technology is an information processing apparatus including a detection section that detects a change in a real world with use of an image picked up of the real world, and an updating section that updates, in a case where a change in the real world is detected by the detection section, a three-dimensional map generated by image pickup of the real world.

A second information processing apparatus of one aspect of the present technology is an information processing apparatus including a detection section that detects a gesture performed by a person who is in a real world with use of an image picked up by a camera installed in the real world, and a processing section that executes, in a case where the gesture is detected by the detection section, a process corresponding to the detected gesture.

A third information processing apparatus of one aspect of the present technology is an information processing apparatus including a recognition section that recognizes an attribute of a person who is in a real world with use of an image picked up by a camera installed in the real world, and a provision section that generates AR (Augmented Reality) content to be provided to the person, on a basis of the attribute recognized by the recognition section, and provides the generated AR content.

An information processing apparatus of one aspect of the present technology is an information processing method executed by an information processing apparatus, including detecting a change in a real world with use of an image picked up of the real world, and updating, in a case where a change in the real world is detected, a three-dimensional map generated by image pickup of the real world.

A program of one aspect of the present technology is a program for causing a computer to execute the processes of detecting a change in a real world with use of an image picked up of the real world, and updating, in a case where a change in the real world is detected, a three-dimensional map generated by image pickup of the real world.

In the first information processing apparatus, the information processing method, and the program of one aspect of the present technology, an image picked up of a real world is used to detect a change in the real world, and in a case where a change in the real world is detected, a three-dimensional map generated by image pickup of the real world is updated.

In the second information processing apparatus of one aspect of the present technology, an image picked up by a camera installed in a real world is used to detect a gesture performed by a person who is in the real world, and in a case where the gesture is detected, a process corresponding to the detected gesture is executed.

In the third information processing apparatus of one aspect of the present technology, an image picked up by a camera installed in a real world is used to recognize an attribute of a person who is in the real world, and AR (Augmented Reality) content to be provided to the person is generated on the basis of the recognized attribute and provided.

It is to be noted that an information processing apparatus may be an independent apparatus or may be an internal block included in one apparatus.

Further, a program can be provided by being transmitted through a transmission medium or by being recorded on a recording medium.

### [Brief Description of Drawings]

[FIG. 1]

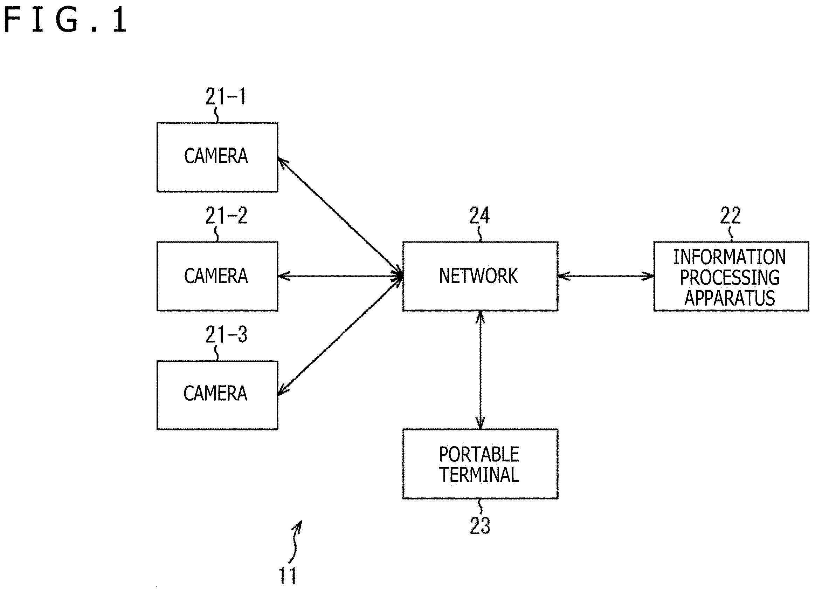

   FIG. 1 is a diagram depicting a configuration of an embodiment of a system to which the present technology is applied.
[FIG. 2]

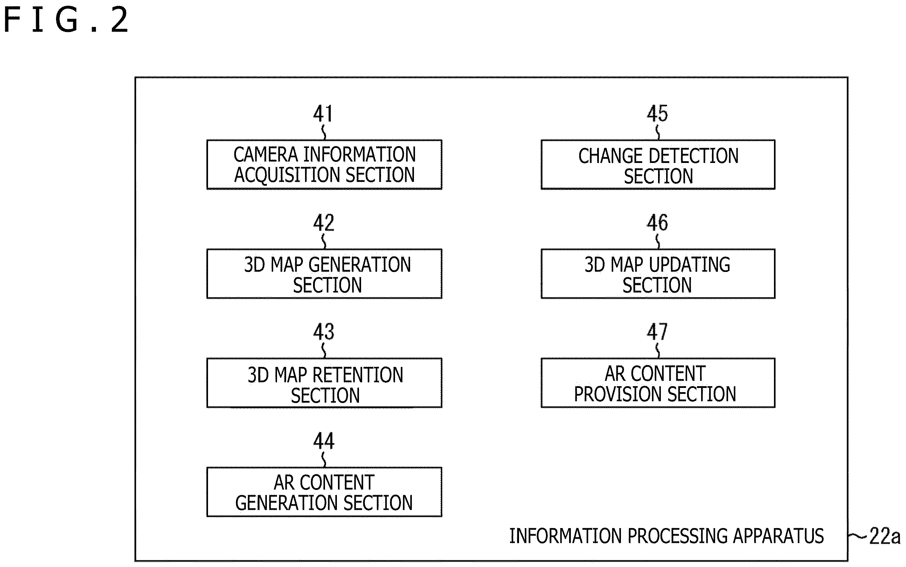

   FIG. 2 is a diagram depicting a configuration example of an information processing apparatus.
[FIG. 3]

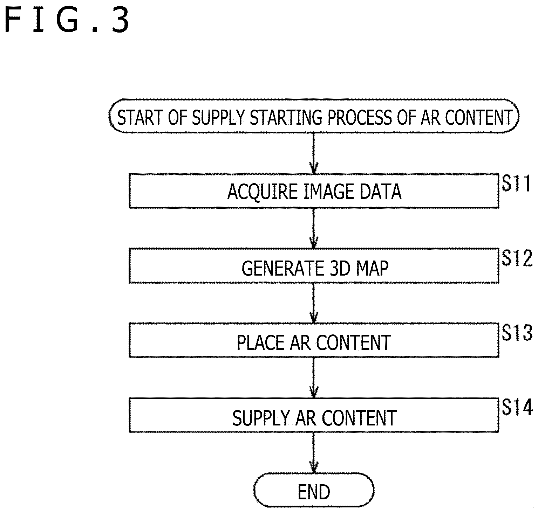

   FIG. 3 is a flow chart illustrating a process of the information processing apparatus.
[FIG. 4]

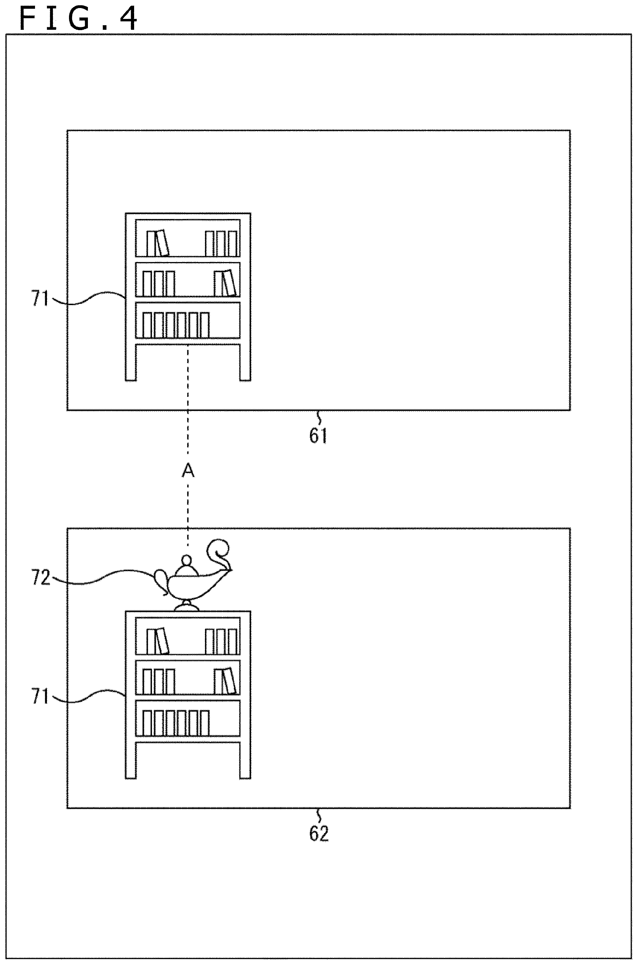

   FIG. 4 is a view depicting an example of AR content.
[FIG. 5]

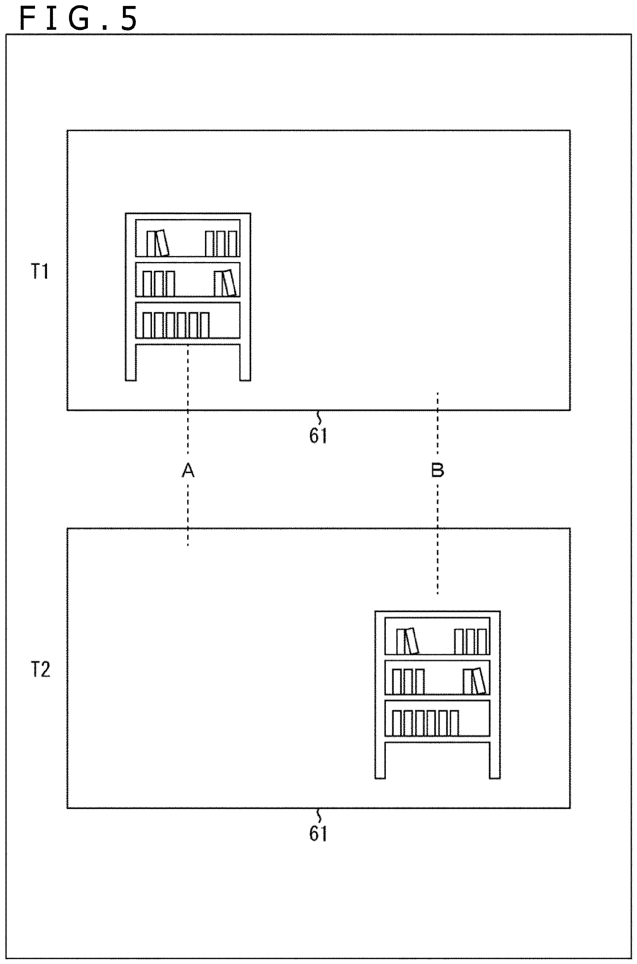

   FIG. 5 is a view illustrating a change in the real world.
[FIG. 6]

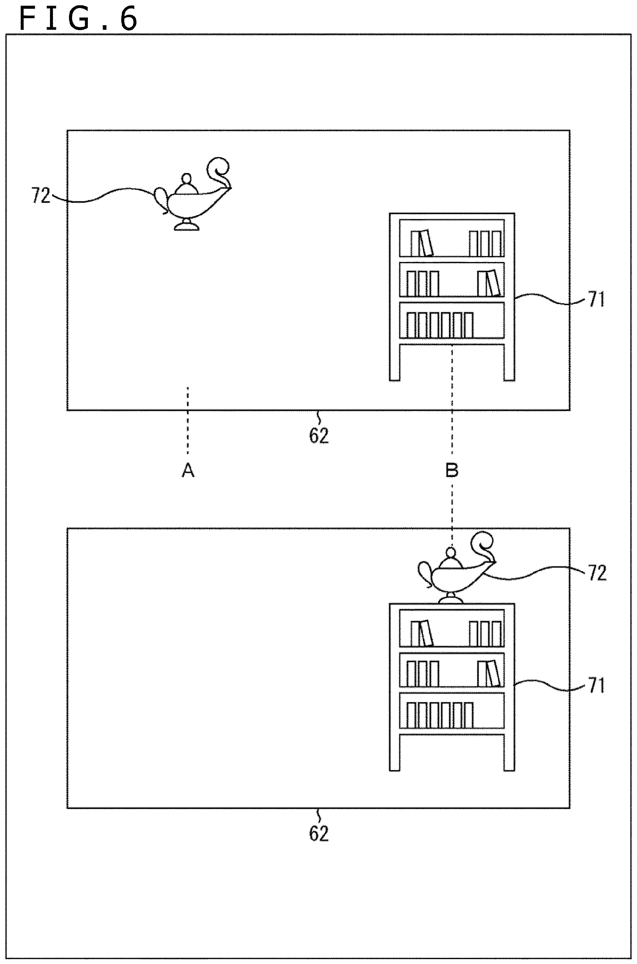

   FIG. 6 is a view illustrating updating of a 3D map.
[FIG. 7]

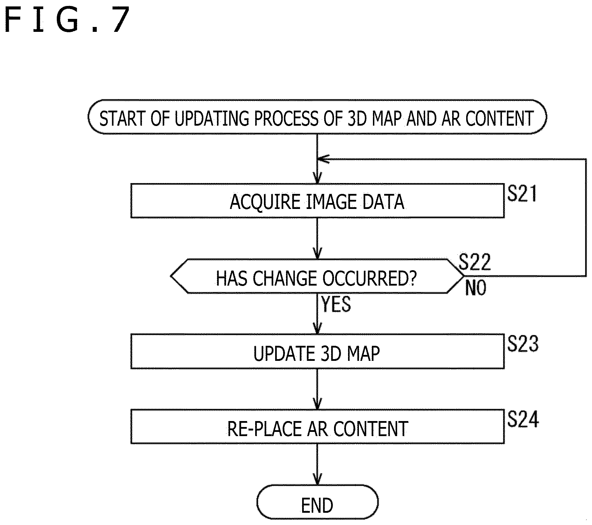

   FIG. 7 is a flow chart illustrating a process of the information processing apparatus.
[FIG. 8]

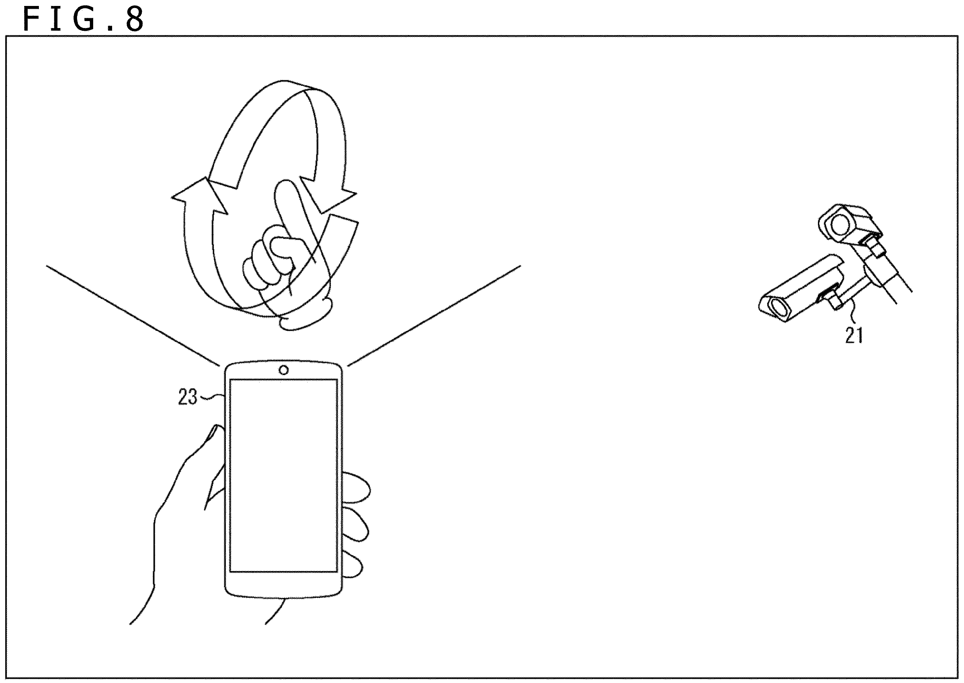

   FIG. 8 is a view illustrating detection of a gesture.
[FIG. 9]

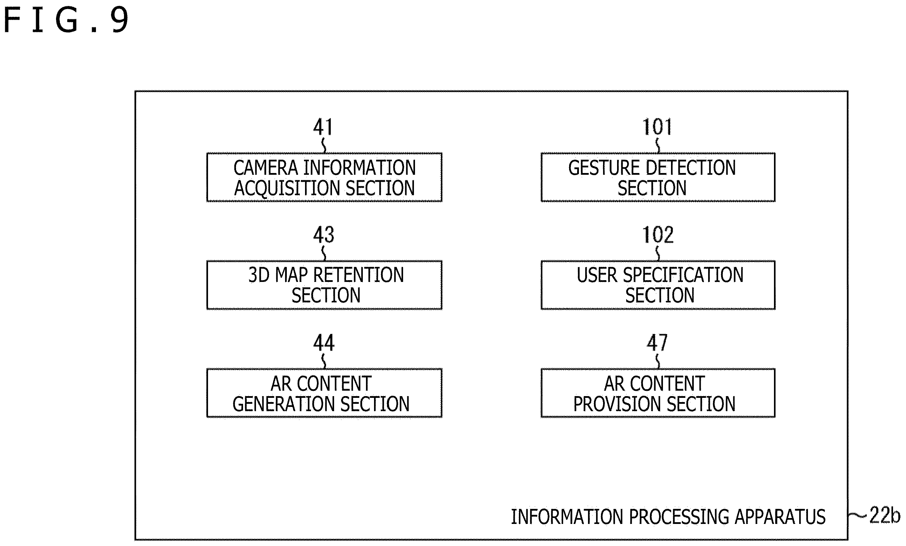

   FIG. 9 is a diagram depicting another configuration example of the information processing apparatus.
[FIG. 10]

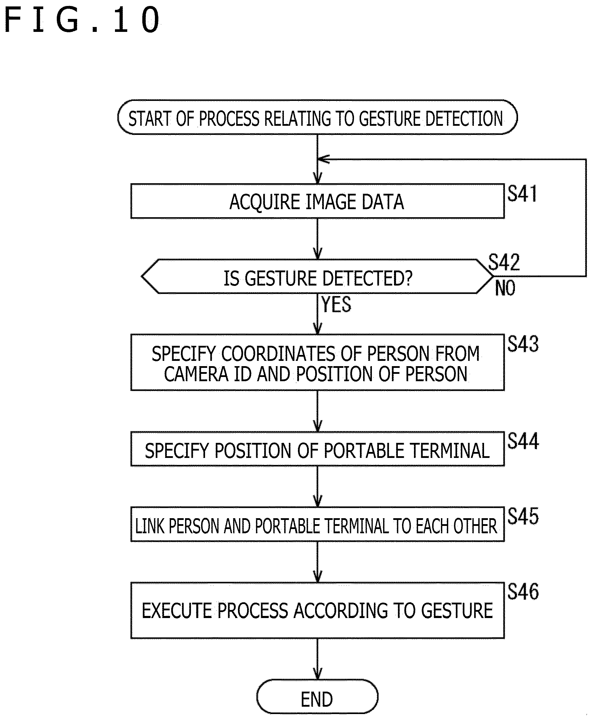

   FIG. 10 is a flow chart illustrating another process of the information processing apparatus.
[FIG. 11]

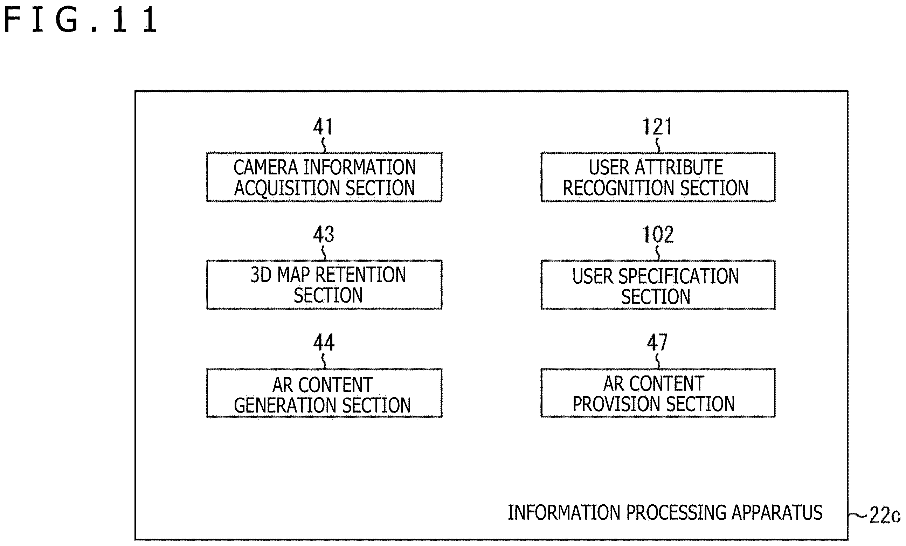

   FIG. 11 is a diagram depicting another configuration example of the information processing apparatus.
[FIG. 12]

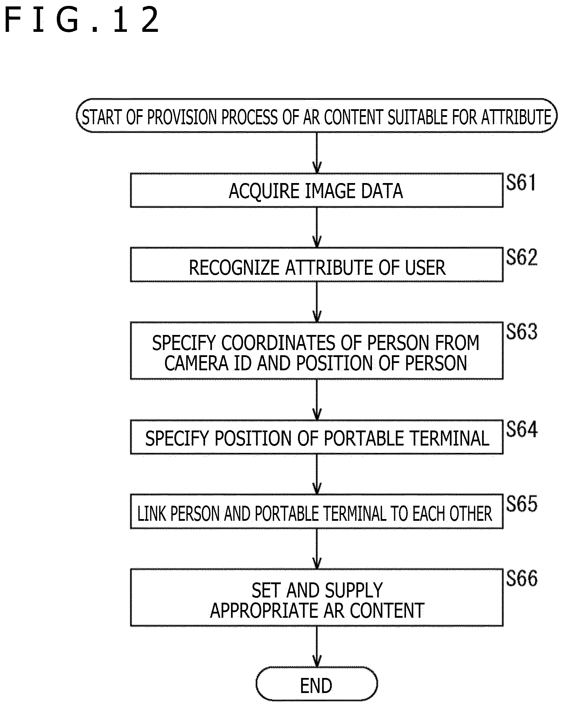

   FIG. 12 is a flow chart illustrating another process of the information processing apparatus.
[FIG. 13]

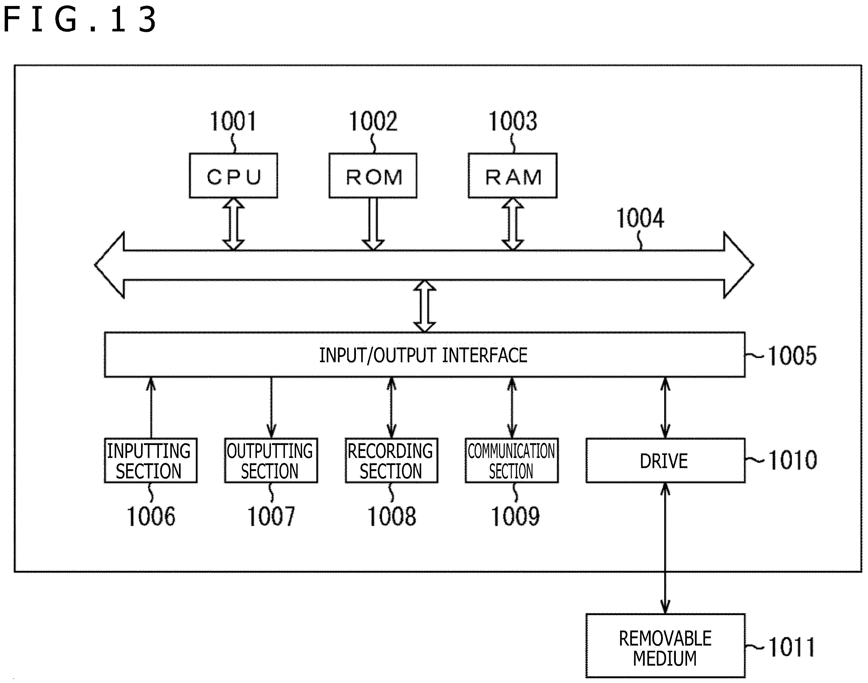

   FIG. 13 is a diagram depicting a configuration example of a personal computer.

### [Description of Embodiments]

In the following, modes for carrying out the present technology (hereinafter referred to as embodiments) are described.

### <Example of System Configuration>

FIG. 1 is a diagram depicting a configuration of an embodiment of an information processing system to which the present technology is applied. In the information processing system 11 depicted in FIG. 1, cameras 21-1 to 21-3, an information processing apparatus 22, and a portable terminal 23 are connected to one another by a network 24 in such a manner that they can individually perform transmission and reception of data.

The information processing system 11 depicted in FIG. 1 generates a three-dimensional map (hereinafter referred to as a 3D map), places AR (Augmented Reality) content on the generated 3D map, and supplies the placed AR content to a user. The information processing system 11 also performs a process of detecting, in a case where the generated 3D map undergoes a change, the change and updating the 3D map.

In the following description, in a case where there is no necessity to distinguish the cameras 21-1 to 21-3 from one another, each of them is referred to simply as a camera 21. While the three cameras 21 are depicted in FIG. 1, the number of cameras 21 is not limited to three, and a plurality of cameras 21 is connected to the network 24. While one information processing apparatus 22 and one portable terminal 23 are depicted in FIG. 1, a plurality of information processing apparatuses 22 and a plurality of portable terminals 23 are connected to the network 24.

The network 24 is a network corresponding, for example, to a home network, a LAN (Local Area Network), a WAN (Wide Area Network), or a wide area network such as the Internet and is configured as a wired or/and wireless network.

The camera 21 picks up an image and supplies the image (image data) to the information processing apparatus 22 through the network 24. The image data to be supplied may be image data of a still image or may be image data of a moving image. The information processing apparatus 22 uses the image data supplied thereto to generate a 3D map or update a 3D map already generated.

The information processing apparatus 22 generates AR content, places the AR content at a predetermined position on a 3D map, and supplies the thus placed AR content to the portable terminal 23. When the 3D map is updated, the information processing apparatus 22 changes the placed position of the AR content, or changes the AR content to different AR content and places the different AR content, as occasion demands.

The information processing apparatus 22 supplies AR content to the portable terminal 23. The portable terminal 23 is a smartphone, a tablet terminal, a smart glass, a head-mounted display, or the like. For example, when the user is picking up an image of a position A in the real world, for which a 3D map has been generated, with the portable terminal 23, AR content placed at the position A is supplied to the portable terminal 23 to thereby provide the AR content to the user.

### <Functional Configuration Example of Information Processing Apparatus>

FIG. 2 is a diagram depicting a functional configuration example of the information processing apparatus 22. The information processing apparatus 22 depicted in FIG. 2 is the information processing apparatus 22 according to the first embodiment and is referred to as an information processing apparatus 22a.

The information processing apparatus 22a includes a camera information acquisition section 41, a 3D map generation section 42, a 3D map retention section 43, an AR content generation section 44, a change detection section 45, a 3D map updating section 46, and an AR content provision section 47.

The camera information acquisition section 41 acquires image data of an image picked up by the camera 21 and information of an ID that uniquely specifies the camera 21 and so forth.

The 3D map generation section 42 analyzes an image based on image data supplied from the camera information acquisition section 41 to generate a 3D map. The generated 3D map is retained (recorded) in the 3D map retention section 43.

The AR content generation section 44 generates AR content to be placed on the 3D map and places the AR content at a predetermined position on the 3D map. The AR content placed on the 3D map by the AR content generation section 44 is supplied to the portable terminal 23 of the user by the AR content provision section 47.

The AR content provision section 47 supplies AR content placed at a position on a 3D map corresponding to the position in the real world whose image is being picked up by the portable terminal 23, to the portable terminal 23.

In a case where a change, for example, a change of layout of a shelf, occurs in the real world on which a 3D map retained in the 3D map retention section 43 is based, it is necessary to change (update) also the 3D map according to the change. In the present embodiment, an image based on image data acquired by the camera information acquisition section 41 is analyzed by the change detection section 45, and in a case where a change occurs in the real world, the change is detected.

In a case where a change of the real world is detected by the change detection section 45, the 3D map updating section 46 performs updating of a 3D map retained in the 3D map retention section 43 in such a manner that the change in the real world is reflected on the 3D map.

### <Process of Information Processing Apparatus>

A process relating to generation of a 3D map and supply of AR content performed by the information processing apparatus 22a is described with reference to a flow chart of FIG. 3.

In step S11, the camera information acquisition section 41 acquires image data of an image picked up by the camera 21. As the camera 21 for picking up an image when a 3D map is to be generated, a 2D camera or a 3D camera can be used, and a camera that acquires a color image may be used or a camera that acquires a monochromatic image may be used.

In a case where the camera 21 is a 3D camera, a stereo camera can be used. As the camera 21, a camera that performs distance measurement using the iToF (Indirect time of flight) method or the dToF (Direct time of flight) method can be used. It is also possible to use an ultrasonic sensor in place of the camera 21 that performs distance measurement. As the camera 21, it is also possible to use a camera called a multispectral camera, or a polarization camera.

Such cameras as mentioned above may be used in combination to acquire images to be used when a 3D map is generated. For example, an image from a 2D camera, an image from a multispectral camera, or/and an image from a polarization camera may be used to generate a 3D map.

For example, an image from a 3D camera, an image from a multispectral camera, or/and an image from a polarization camera may be used to generate a 3D map.

It is to be noted that the types of the cameras 21 or the combinations of the cameras 21 exemplified here are illustrative only and are not descriptions for restriction. For example, a case in which a sensing method other than the distance measurement methods described above is used is also within the range of application of the present technology.

The camera 21 may be a fixed camera that is fixed at a predetermined position or may be a portable camera. As the fixed camera, a camera that is called a celestial camera or the like and is installed on the ceiling or a wall, or a camera called a surveillance camera can be used.

As the portable camera, a device called a scanning device, for example, a hand-held scanner that is held by a hand to perform scanning, a laser scanner placed on a ground surface with use of a tripod or the like to perform scanning, a device that is carried on an automobile, a truck, or the like such that it travels to perform scanning, and so forth can be used.

As the camera 21, a camera carried on a drone, an AVG (Automatic Guided Vehicle), a walking robot, or the like may be used.

As the portable camera, it is also possible to use a smartphone, a smart glass, a tablet terminal, or the like. Any of such terminals can be used also as the portable terminal 23.

When a 3D map is to be generated, an image of the real world for which a 3D map is to be generated is picked up using the camera 21, and a lot of image data is acquired.

It is to be noted that an image used to generate a 3D map may be data that has been processed in such a manner as not to include private information. For example, in a case where a 3D map is generated using a feature point extracted from an image, a feature point extracted from an image may be supplied to the information processing apparatus 22a. Also in a case where an image is supplied to the information processing apparatus 22a, an image in which the face of a person appearing in the image is blurred out or processed so as not to be visually recognized may be supplied. This makes it possible to perform generation of a 3D map that is privacy friendly.

In step S12, the 3D map generation section 42 generates a 3D map using the image data that is picked up by the camera 21 and acquired from the camera information acquisition section 41. The 3D map is generated, for example, by analyzing an image, generating point group data, executing a stitching process, and removing overlaps. It is sufficient if the generation of the 3D map is performed by applying an appropriate method depending upon what camera is used as the camera 21, for example, whether a 2D camera is used or a 3D camera is used, and depending upon the type of the camera used, the type of data to be handled, and so forth.

In step S13, the AR content generation section 44 generates AR content and places the AR content at a predetermined position on the 3D map. For example, AR content for displaying a signboard or a guide is generated and placed in a region corresponding to a wall in the 3D map, or AR content of description of a merchandise is generated and placed in a region corresponding to a merchandise shelf in the 3D map.

The generated AR content is retained in association with the 3D map into the 3D map retention section 43. Alternatively, the process in step S13 may be executed when the AR content is to be provided to the user, in such a manner that AR content suitable to be provided to the user at that time is generated.

In step S14, the AR content is supplied by the AR content provision section 47 to the portable terminal 23. The process in step S14 is performed when a request for supply of the AR content is received from the portable terminal 23 side, and the AR content placed at the position on the 3D map corresponding to the position in the real world at which the portable terminal 23 is picking up an image is supplied from the AR content provision section 47 to the portable terminal 23 through the network 24 and is reproduced on the portable terminal 23, to thereby provide the AR content to the user.

In this manner, a 3D map is generated, and AR content is placed on the generated 3D map.

The upper view of FIG. 4 is a view depicting an example of the real world (referred to as a real world 61) whose image is picked up by the portable terminal 23. At a position A in the real world 61, a shelf 71 is placed. In a case where an image of the real world 61 is being picked up by the portable terminal 23, the AR content provision section 47 supplies AR content placed at a position A on the 3D map corresponding to the position A in the real world whose image is being picked up by the portable terminal 23, to the portable terminal 23.

The lower view of FIG. 4 is a view depicting an example of a screen image in which AR content supplied to the portable terminal 23 is displayed on a display 62 of the portable terminal 23. On the display 62 of the portable terminal 23, the shelf 71 placed in the real world 61 is displayed, and AR content 72 of a shape of a lamp is displayed on the shelf 71.

Incidentally, in a case where a change occurs in the real world from which the 3D map retained in the 3D map retention section 43 has been acquired, for example, in such a case that the layout of the shelf 71 is changed, there is the possibility that a divergence may occur between the 3D map and the real world.

For example, there may be a case that, although the shelf 71 is positioned at the position A in the real world 61 at a time T1 at which the 3D map is generated as depicted in the upper view of FIG. 5, in the real world 61 at a time T2 after time elapses from the time T1, the shelf 71 has moved to a position B as depicted in the lower view of FIG. 5.

In such a case, if the 3D map is not updated, the 3D map remains the map as generated at the time T1, and hence, the state in which the shelf 71 is positioned at the position A on the 3D map (state depicted in the upper view of FIG. 5) is maintained. Meanwhile, in the real world 61, the shelf 71 is in the state in which it is positioned at the position B (state depicted in the lower view of FIG. 5). That is, in this case, in regard to the position of the shelf 71, there is a divergence between the 3D map and the real world.

When a 3D map in such a state as depicted in the upper view of FIG. 5 is retained in the 3D map retention section 43 without being updated, if an image of the real world 61 in such a state as depicted in the lower view of FIG. 5 is picked up by the portable terminal 23 and the AR content 72 is supplied from the AR content provision section 47, there is the possibility that such a screen image as depicted in the upper view of FIG. 6 may be supplied to the user.

Referring to the upper view of FIG. 6, on the display 62 of the portable terminal 23, such a screen image is displayed that the AR content 72 is displayed at the position corresponding to the position A of the real world 61 and the shelf 71 is displayed at the position corresponding to the position B of the real world 61. In this manner, if, when a change occurs in the real word, the change is not reflected on the 3D map, there is the possibility that the AR content 72 may not be displayed at a correct position.

Therefore, when a change occurs in the real world, the change is reflected also on the 3D map such that the AR content 72 is displayed at an appropriate position as depicted in the lower view of FIG. 6. Referring to the lower view of FIG. 6, on the display 62 of the portable terminal 23, the shelf 71 placed at the position B of the real world 61 is displayed and the AR content 72 is displayed on the shelf 71. By reflecting the change that the shelf 71 has been moved to the position B on the 3D map and re-placing the AR content, it is made possible to present to the user a screen image in which the AR content 72 is placed at such an appropriate position as depicted in the lower view of FIG. 6.

In this manner, if a divergence occurs between the 3D map and the real world, since the AR content placed on the 3D map is not displayed at an intended position, it is necessary to re-generate a 3D map or re-place the AR content. When the 3D map is to be updated, it is necessary to re-pick up an image of the real world including the portion at which the change occurs to collect data.

In particular, for example, as described hereinabove with reference to FIG. 5, in such a case that such a change that the shelf A has moved from the position A to the position B occurs in the real world 61, an image of the real world 61 is picked up again after the time T2 at which such a change occurs, and an image at the position B, point group data acquired from the image, and so forth are acquired to perform updating of the 3D map.

In such image re-pickup as just described, conventionally, it is necessary to execute processes similar to the processes in steps S1 and S2 (FIG. 3) described above. Therefore, such a step as to go to the real world 61 while carrying the camera 21 and perform image pickup is generated, or such labor as to send a person for such image pickup is generated. In order to update the 3D map by the conventional method, man-hours are generated, and there is the possibility that time loss may occur before updating of the 3D map is completed.

According to the present embodiment, since updating of the 3D map and re-placement of the AR content on the updated 3D map are performed as described below, it is possible to reduce the man-hours required for the updating and suppress such a situation that time loss occurs.

### <Processing Relating to Updating>

FIG. 7 is a flow chart illustrating processes relating to updating of a 3D map and AR content performed by the information processing apparatus 22a.

In step S21, the camera information acquisition section 41 acquires image data and identification information for identifying the camera 21. There exists the camera 21 that continues, after a 3D map is generated, image pickup of the real world on which the 3D map is based, and an image from the camera 21 is supplied to the information processing apparatus 22a.

As the camera 21 that continues image pickup of the real world, for example, a surveillance camera, a fixed point camera, and so forth can be used. Also the camera incorporated in the portable terminal 23 of the user can be used.

The camera information acquisition section 41 acquires image data from the camera 21, which is picking up an image of the real world, at predetermined intervals. In step S22, the change detection section 45 analyzes the image data supplied from the camera information acquisition section 41 and decides whether or not a change has occurred in the real world.

For example, the camera 21 is installed as a fixed camera at a position at which it picks up an image of the real world 61 depicted in FIG. 5. From the camera 21 thus installed, an image (video) picked up by the camera 21 is supplied to the change detection section 45 via the camera information acquisition section 41.

The change detection section 45 retains therein at least an image supplied at a preceding time. Here, it is assumed that an image acquired at the time T1 as depicted in the upper view of FIG. 5 (hereinafter referred to as an image T1) is retained. It is assumed that an image as depicted in the lower view of FIG. 5 (hereinafter referred to as an image T2) is acquired at the time T2.

The change detection section 45 detects the shelf 71 from the image T1 supplied at the time T1. To detect the shelf 71 is, for example, to detect a feature point for specifying the substance of the shelf 71 (hereinafter referred to as a feature point T1). The change detection section 45 detects, at the time T2, a feature point of the shelf 71 (hereinafter referred to as a feature point T2) from the image T2 supplied thereto at the time T2.

The change detection section 45 compares the feature point T1 and the feature point T2 with each other. If there is no change in the real world, in this case, if the shelf 71 has not moved, since coordinates of the feature point T1 and coordinates of the feature point T2 detected from the shelf 71 are not different from each other, a result of the comparison between positions of the feature points, in other words, a result of calculation of a difference between the positions of the feature points, indicates a value that is equal to or smaller than a threshold value.

By contrast, if a change occurs in the real world, since the coordinates of the feature point change, the amount of the change in the position of the feature point becomes equal to or greater than the threshold value. In the case where the amount of the change in the position of the feature point is equal to or greater than the threshold value, it is decided that a change has occurred in the real world. In such a situation as depicted in FIG. 5, the difference between the feature point T1 and the feature point T2 is equal to or greater than the threshold value, and it is decided that a change has occurred in the real world 61.

It is to be noted that this method of decision is illustrative only, and another method may be used to detect a change in the real world.

It is to be noted that the image that is used for updating of a 3D map is an image from a surveillance camera, a fixed point camera, or the like that is picking up an image of the real world as described hereinabove. For example, in a case where updating of a 3D map is performed using an image from a camera installed in a shopping mall, the possibility that a customer may appear in the image is high, and a process that takes privacy of the customer into consideration is sometimes demanded. Therefore, the image used to update the 3D map may be data processed so as not to include personal information.

For example, in the case where a 3D map is generated using a feature point extracted from an image, a feature point extracted from an image may be supplied to the information processing apparatus 22a. Also in the case where an image is supplied to the information processing apparatus 22a, an image in which the face of a person appearing in the image is blurred out or processed so as not to be visually recognized may be supplied. This makes it possible to perform updating of the 3D map with privacy taken into consideration.

In a case where it is decided in step S22 that no change has occurred in the real world, the processing is returned to step S21 and the processes at and after step S21 are repeated. In particular, a series of processes that image pickup is performed continually by the camera 21 and the resulting image is analyzed to decide whether or not there is a change in the real world is performed is continued.

On the other hand, in a case where it is decided in step S22 that a change has occurred in the real world, the processing is advanced to step S23. In step S23, the 3D map updating section 46 updates the 3D map retained in the 3D map retention section 43. The change detection section 45 detects, from the image acquired when it is decided that a change has occurred, data necessitated when the 3D map is generated, for example, point group data, and the point group data is used to update the 3D map corresponding to the location at which the change has occurred in the real world.

Since an image from the camera 21 that is picking up an image of the real world is analyzed to detect a change that has occurred in the real world and, when a change is detected, the 3D map is updated, the time loss after the change occurs in the real world until the 3D map is updated can be reduced. Further, where a video from a fixed camera is used, the step of performing image pickup again can be reduced, and the time and labor required for the image re-pickup can be reduced.

After the 3D map is updated in this manner, re-placement of the AR content is performed in step S24. The AR content generation section 44 places the AR content on the updated 3D map. Where the AR content is re-placed on the updated 3D map, even if a change occurs in the real world 61, for example, such an image in which the AR content 72 corresponding to the real world having undergone the change is displayed appropriately as depicted in the lower view of FIG. 6 can be presented to the user.

While the description has been given here taking as an example the case in which the shelf 71 is moved, the foregoing can be applied also to such a case that, for example, it is detected that the landscape has changed as described in the following. As an example, a case is assumed in which a video from the camera 21 that is picking up an image of a road, for example, a road in a town or a road in such facilities as a shopping mall, is analyzed and such a situation that the road width is reduced due to a construction occurs.

In a case where such a situation as just described occurs, the change in the real world 61 that the road has become narrower is detected, the 3D map is updated, and then AR content for the narrowed road is placed on the road. For example, a signboard for calling attention like "Caution! Narrow Road" may be provided as the AR content.

As another example, for example, an image of commodities on a commodity shelf is picked up by the camera 21, and when some commodities are sold and the number of commodities on the commodity shelf decreases by a predetermined number, the decrease in the number of commodities is detected as a change in the real world 61. Further, when a change is detected, AR content for alerting a salesclerk to that the commodities have decreased may be displayed, or such a signboard as "Hot selling product, Limited stock" may be displayed as AR content to customers.

As a further example, a video of a surveillance camera installed outdoors is acquired, and a change in landscape such as a change in terrain due to a disaster, a seasonal change of plants, a change due to a construction, a change due to redevelopment, or a change due to a new building construction is detected as a change in the real world 61. When a change is detected, the 3D map is updated, so that navigation adapted, for example, to a change in terrain due to a disaster can be performed.

While it is described in the embodiment that image data is supplied from the camera 21 to the information processing apparatus 22a and a change in the real world 61 is detected by the change detection section 45, for example, the camera 21 may have a function for detecting a change in the real world 61.

For example, the camera 21 side may perform the processes until a change of the real world 61 is detected, and only when a change of the real world 61 is detected, image data and so forth may be sent to the information processing apparatus 22a. Alternatively, the camera 21 side may perform the processes until it detects a feature point from a picked up image and the feature point is sent to the information processing apparatus 22a. In other words, such a configuration may be applied that some of the processes that are performed by the information processing apparatus 22 described above are performed by the camera 21 side.

Such processes may be performed by an AI (artificial intelligence) chip that is incorporated in the camera 21.

### <Second Embodiment>

FIG. 8 is a view depicting an embodiment (referred to as a second embodiment) in a case where an image of the real world 61 is picked up by the camera 21 to detect a change in the real world 61.

If the user performs, with use of the portable terminal 23 in which the camera is incorporated, a predetermined gesture within an angle of field of the camera, the portable terminal 23 performs a process corresponding to the gesture.

The camera 21 is, for example, a camera installed in a shopping mall and is picking up an image of a predetermined region in the shopping mall. The camera 21 may also be configured such that it detects a gesture of a user and can perform a process corresponding to the gesture.

While, in the first embodiment, a change of the real world 61 is detected, it is made possible to detect a gesture of a user as the change and execute a process corresponding to the detected gesture.

FIG. 9 is a diagram depicting a configuration example of an information processing apparatus 22b in a case where a gesture of a user is detected and a corresponding process is executed. In the information processing apparatus 22b depicted in FIG. 9, elements similar to those of the information processing apparatus 22a depicted in FIG. 2 are denoted by the same reference signs, and description thereof is suitably omitted.

The information processing apparatus 22b includes the camera information acquisition section 41, the 3D map retention section 43, the AR content generation section 44, the AR content provision section 47, a gesture detection section 101, and a user specification section 102.

The depicted configuration of the information processing apparatus 22b is for a case where a 3D map already generated is retained in the 3D map retention section 43 and AR content placed on the 3D map is supplied to the portable terminal 23. In a case where it is detected that a change has occurred in the real world 61 and updating of the 3D map is to be performed, it is sufficient if the change detection section 45 and the 3D map updating section 46 are provided in the information processing apparatus 22b. It is also possible to adopt a configuration obtained by combining the information processing apparatus 22a in the first embodiment and the information processing apparatus 22b in the second embodiment.

The gesture detection section 101 analyzes image data acquired via the camera information acquisition section 41 from the camera 21 to detect a gesture performed by the user and performs a process corresponding to the detected gesture. The user specification section 102 specifies the user (portable terminal 23 of the user) by whom the gesture has been performed.

A process relating to gesture detection performed by the information processing apparatus 22b is described with reference to a flow chart of FIG. 10.

In step S41, the gesture detection section 101 acquires image data via the camera information acquisition section 41 from the camera 21. In step S42, the gesture detection section 101 analyzes the acquired image to detect a gesture.

For example, a person is detected from an image of an analysis target, and in a case where a person is detected, a hand of the person is further detected. In a case where a hand of the person is detected, a movement of the hand is detected over a plurality of frames, and it is decided whether or not the movement corresponds to a predetermined gesture.

Through such processes as described above, in a case where it is decided in step S42 that a gesture is detected, the processing is advanced to step S43, but in a case where it is decided in step S42 that a gesture is not detected, the processing is returned to step S41, and the gesture detection process is performed continually until a gesture is detected.

In step S43, coordinates of the person (user) who has performed the gesture are specified by the user specification section 102. The camera information acquisition section 41 has acquired therein information (assumed as camera ID) for uniquely specifying the camera 21, in addition to the image data. From the camera ID, the place in the real world 61 at which the camera 21 is picking up an image is known, and a corresponding location on the 3D map can also be decided.

By analyzing an image being picked up by the camera 21, it can be decided at which part in the image the user is present. From results of such decisions, coordinates of the position at which the user is present on a coordinate system set to the real world 61 are acquired. What is detected may be coordinates of a position, which corresponds to the position of the user who is present in the real world 61, on a coordinate system set to the 3D map.

In step S44, the user specification section 102 specifies the position of the portable terminal 23. For example, the user specification section 102 acquires an image being picked up by the portable terminal 23 and extracts a feature point from the acquired image. The extracted feature point is collated with the 3D map retained in the 3D map retention section 43 to specify the position (substance) coincident with the extracted feature point. The position of the portable terminal 23 by which an image is being picked up is specified by such processes as described above.

In step S45, the person and the portable terminal 23 are linked to each other. When the position of the person specified in step S43 and the position of the portable terminal 23 specified in step S44 coincide with each other, the person and the portable terminal 23 are linked to each other. By performing the linking, the person who has performed the gesture and the portable terminal 23 of the person who has performed the gesture are linked to each other.

In step S46, a process corresponding to the gesture is executed. For example, in a case where the gesture is an instruction to the portable terminal 23, the instruction issued from the user by the gesture is notified to the specified portable terminal 23. The portable terminal 23 executes a process corresponding to the instruction supplied from the information processing apparatus 22b.

For example, in a case where the gesture is an instruction to AR content displayed on the display 62 of the portable terminal 23, the AR content corresponding to the instruction is set and supplied.

Since a gesture is detected by the camera 21 and a process corresponding to the gesture is executed in this manner, for example, even in a case where the user of the portable terminal 23 performs a gesture outside the angle of field of the camera of the portable terminal 23, it is possible to cause the portable terminal 23 to execute the process corresponding to the instruction given by the gesture performed by the user.

### <Third Embodiment>

As a third embodiment, a case is described in which information regarding a user is detected and AR content suitable for the obtained information regarding the user is provided.

The camera 21 is, for example, a camera installed in a shopping mall and is picking up an image of a predetermined region in the shopping mall. Information regarding a user whose image is being picked up by the camera 21 is acquired, and AR content is selected on the basis of the acquired information and is provided. As the information regarding the user, an attribute of the user is available, and as the attribute of the user, for example, a sex, an age, and so forth are available.

FIG. 11 is a diagram depicting a configuration example of an information processing apparatus 22c in a case where an attribute of a user is detected and AR content suitable for the user is provided. In the information processing apparatus 22c depicted in FIG. 11, elements similar to those of the information processing apparatus 22a depicted in FIG. 2 are denoted by the same reference signs, and description thereof is suitably omitted.

The information processing apparatus 22c includes the camera information acquisition section 41, the 3D map retention section 43, the AR content generation section 44, the AR content provision section 47, a user specification section 102, and a user attribute recognition section 121.

The user attribute recognition section 121 recognizes an attribute of a user. As the attribute, a sex, an age, with family, with friend, and so forth are available. When it is possible to acquire preference information or the like of a user in advance, it is also possible to use the preference information as the attribute. As the attribute, a behavior history may be used. The behavior history may be, for example, that the user has stayed in front of a predetermined shop for a predetermined period of time, that the user has purchased a commodity, or the like. Further, as the attribute, a situation of the user in the real world may be used. The situation of the user in the real world is, for example, that the user is in a crowded situation or the like.

The depicted configuration of the information processing apparatus 22c is for a case where a 3D map already generated is retained in the 3D map retention section 43 and AR content placed on the 3D map is supplied to the portable terminal 23. In a case where updating of the 3D map is performed when a change occurs in the real world 61, it is sufficient if the information processing apparatus 22c includes the change detection section 45 and the 3D map updating section 46. Further, in a case where a gesture of a user is detected and a process corresponding to the gesture is executed, it is sufficient if the information processing apparatus 22c includes the gesture detection section 101.

It is also possible to adopt a configuration in which the information processing apparatus 22a in the first embodiment and the information processing apparatus 22b in the second embodiment described hereinabove are combined with the information processing apparatus 22c in the third embodiment.

Action of the information processing apparatus 22c depicted in FIG. 11 is described with reference to a flow chart of FIG. 12.

In step S61, the user attribute recognition section 121 acquires image data via the camera information acquisition section 41 from the camera 21. In step S62, the user attribute recognition section 121 analyzes the acquired image data to recognize an attribute of the user. For example, such an attribute as a sex or an age is recognized using machine learning such as deep learning. In a case where a behavior history is to be recognized, a movement of a predetermined user is monitored continuously, and if it is detected that the user has performed a behavior of standing still in front of a predetermined shop for a predetermined period of time, the behavior of standing still in front of the shop is recognized by the process in step S62.

After an attribute of the user is recognized in step S62, the processing is advanced to step S63. Since the processes in steps S63 to S65 are similar to those in steps S43 to S65 (FIG. 10), description thereof is omitted herein.

In step S66, the AR content generation section 44 generates (selects) AR content suitable for the recognized attribute, and the AR content provision section 47 supplies the AR content to the portable terminal 23. For example, to a user recognized as male as the attribute, AR content for men is presented, and to a user recognized as female as the attribute, AR content for women is presented. For example, in a case where a history that the user has stood still in front of a predetermined shop has been acquired as the behavior history, AR content relating to the shop in front of which the user has stood still is presented. For example, in a case where a congestion degree is acquired as the situation of the user in the real world, different AR content is presented depending upon whether the congestion degree is high or low,.

In this manner, it is made possible to present AR content suitable for a user with reference to an attribute or a behavior history of the user, a situation of the user, or the like.

### <Recording Medium>

The series of processes described above can be executed not only by hardware but also by software. In a case where the series of processes is executed by software, a program that constitutes the software is installed into a computer. The computer here includes a computer that is incorporated in hardware for exclusive use, a general-purpose personal computer that can execute various functions with use of various programs installed therein, or the like, for example.

FIG. 13 is a block diagram depicting a hardware configuration example of the computer that executes the series of processes described hereinabove in accordance with a program. In the computer, a CPU (Central Processing Unit) 1001, a ROM (Read Only Memory) 1002, and a RAM (Random Access Memory) 1003 are connected to one another by a bus 1004. Further, an input/output interface 1005 is connected to the bus 1004. An inputting section 1006, an outputting section 1007, a storage section 1008, a communication section 1009, and a drive 1010 are connected to the input/output interface 1005.

The inputting section 1006 includes a keyboard, a mouse, a microphone, and so forth. The outputting section 1007 includes a display, a speaker, and so forth. The storage section 1008 includes a hard disk, a nonvolatile memory, or the like. The communication section 1009 includes a network interface and so forth. The drive 1010 drives a removable medium 1011 such as a magnetic disk, an optical disk, a magneto-optical disk, or a semiconductor memory.

In the computer configured as described above, the CPU 1001 loads a program stored, for example, in the storage section 1008 into the RAM 1003 through the input/output interface 1005 and the bus 1004 and executes the program, to thereby perform the series of processes described above.

The program to be executed by the computer (CPU 1001) can be recorded on and provided as the removable medium 1011, for example, as a package medium or the like. Also, it is possible to provide the program through a wired or wireless transmission medium such as a local area network, the Internet, or a digital satellite broadcast.

In the computer, the program can be installed into the storage section 1008 via the input/output interface 1005 by loading the removable medium 1011 onto the drive 1010. Further, the program can be received by the communication section 1009 through a wired or wireless transmission medium and installed into the storage section 1008. Alternatively, it is possible to install the program into the ROM 1002 or the storage section 1008 in advance.

It is to be noted that the program to be executed by the computer may be a program by which processes are performed in a time series according to the order described in the present specification or may be a program in which processes are performed in parallel or at necessary timings such as when they are called.

Further, in the present specification, the term system represents an entire apparatus including a plurality of apparatuses.

It is to be noted that the advantageous effects described in the present specification are illustrative only and are not restrictive, and other advantageous effects may be obtained.

It is to be noted that the embodiment of the present technology is not restricted to the embodiments described hereinabove, and the embodiments can be altered in various manners without departing from the subject matter of the present technology.

Note that the present technology can also adopt the following configurations.
(1) An information processing apparatus including:
   a detection section that detects a change in a real world with use of an image picked up of the real world; and
   an updating section that updates, in a case where a change in the real world is detected by the detection section, a three-dimensional map generated by image pickup of the real world.
(2) The information processing apparatus according to (1) above, in which
   the image includes an image picked up by a camera installed in the real world.
(3) The information processing apparatus according to (1) or (2) above, in which
   the change in the real world includes a change of a position of a substance.
(4) The information processing apparatus according to (1) or (2) above, in which
   the change in the real world includes a change of a landscape.
(5) The information processing apparatus according to any one of (1) to (4) above, in which,
   in a case where the three-dimensional map is updated by the updating section, placement of AR (Augmented Reality) content placed on the three-dimensional map is also updated.
(6) The information processing apparatus according to any one of (1) to (5) above, in which
   the image picked up of the real world includes an image processed so as not to include personal information.
(7) An information processing apparatus including:
   a detection section that detects a gesture performed by a person who is in a real world with use of an image picked up by a camera installed in the real world; and
   a processing section that executes, in a case where the gesture is detected by the detection section, a process corresponding to the detected gesture.
(8) The information processing apparatus according to (7) above, in which
   the gesture includes a gesture performed to a portable terminal by the person, and
   the processing section notifies the portable terminal that an instruction has been given by the gesture to the portable terminal.
(9) An information processing apparatus including:
   a recognition section that recognizes an attribute of a person who is in a real world with use of an image picked up by a camera installed in the real world; and
   a provision section that generates AR (Augmented Reality) content to be provided to the person, on a basis of the attribute recognized by the recognition section, and provides the generated AR content.
(10) The information processing apparatus according to (9) above, in which
   the attribute includes a sex or an age.
(11) The information processing apparatus according to (9) or (10) above, in which
   the attribute includes a situation of the real world.
(12) An information processing method executed by an information processing apparatus, including:
   detecting a change in a real world with use of an image picked up of the real world; and
   updating, in a case where a change in the real world is detected, a three-dimensional map generated by image pickup of the real world.
(13) A program for causing a computer to execute the processes of:
   detecting a change in a real world with use of an image picked up of the real world; and
   updating, in a case where a change in the real world is detected, a three-dimensional map generated by image pickup of the real world.

### [Reference Signs List]

- 11:: Information processing system
- 21:: Camera
- 22:: Information processing apparatus
- 23:: Portable terminal
- 24:: Network
- 41:: Camera information acquisition section
- 42:: 3D map generation section
- 43:: 3D map retention section
- 44:: AR content generation section
- 45:: Change detection section
- 46:: 3D map updating section
- 47:: AR content provision section
- 61:: Real world
- 62:: Display
- 71:: Shelf
- 72:: AR content
- 101:: Gesture detection section
- 102:: User specification section
- 121:: User attribute recognition section

## Claims

1. An information processing apparatus comprising:
a detection section that detects a change in a real world with use of an image picked up of the real world; and
an updating section that updates, in a case where a change in the real world is detected by the detection section, a three-dimensional map generated by image pickup of the real world.

2. The information processing apparatus according to claim 1, wherein
the image includes an image picked up by a camera installed in the real world.

3. The information processing apparatus according to claim 1, wherein
the change in the real world includes a change of a position of a substance.

4. The information processing apparatus according to claim 1, wherein
the change in the real world includes a change of a landscape.

5. The information processing apparatus according to claim 1, wherein,
in a case where the three-dimensional map is updated by the updating section, placement of AR (Augmented Reality) content placed on the three-dimensional map is also updated.

6. The information processing apparatus according to claim 1, wherein
the image picked up of the real world includes an image processed so as not to include personal information.

7. An information processing apparatus comprising:
a detection section that detects a gesture performed by a person who is in a real world with use of an image picked up by a camera installed in the real world; and
a processing section that executes, in a case where the gesture is detected by the detection section, a process corresponding to the detected gesture.

8. The information processing apparatus according to claim 7, wherein
the gesture includes a gesture performed to a portable terminal by the person, and
the processing section notifies the portable terminal that an instruction has been given by the gesture to the portable terminal.

9. An information processing apparatus comprising:
a recognition section that recognizes an attribute of a person who is in a real world with use of an image picked up by a camera installed in the real world; and
a provision section that generates AR (Augmented Reality) content to be provided to the person, on a basis of the attribute recognized by the recognition section, and provides the generated AR content.

10. The information processing apparatus according to claim 9, wherein
the attribute includes a sex or an age.

11. The information processing apparatus according to claim 9, wherein
the attribute includes a situation of the real world.

12. An information processing method executed by an information processing apparatus, comprising:
detecting a change in a real world with use of an image picked up of the real world; and
updating, in a case where a change in the real world is detected, a three-dimensional map generated by image pickup of the real world.

13. A program for causing a computer to execute the processes of:
detecting a change in a real world with use of an image picked up of the real world; and
updating, in a case where a change in the real world is detected, a three-dimensional map generated by image pickup of the real world.
